# EUROPÄISCHE PATENTSCHRIFT

(11) **EP 0 845 468 B1**
(45) Veröffentlichungstag und Bekanntmachung des Hinweises auf die Patenterteilung: **14.10.2009**
(21) Anmeldenummer: 97118322.3
(22) Anmeldetag: 22.10.1997
(51) Int. Cl.: C07F 7/16

(54) **Verfahren zur Herstellung von Alkylhalogensilanen**
Process for preparing alkylhalogen silanes
Procédé de préparation d'alkylhalogène silanes

(30) Priorität: 04.11.1996 DE 19645359
(43) Veröffentlichungstag der Anmeldung: 03.06.1998
(73) Patentinhaber: Momentive Performance Materials GmbH, 51368 Leverkusen (DE)
(72) Erfinder: Steiner, Matthias-Sven, Dr., 51373 Leverkusen (DE); Degen, Bruno, Dr., 53804 Much (DE); Weber, Rainer, Dr., 51519 Odenthal (DE)
(74) Vertreter: Gille Hrabal Struck Neidlein Prop Roos

(56) Entgegenhaltungen:
- EP-A- 0 391 133
- EP-A- 0 620 226
- DE-A- 3 501 085
- US-A- 4 450 282

## Beschreibung

Die vorliegende Erfindung betrifft ein Verfahren zur Herstellung von Alkylhalogensilanen durch Umsetzung einer Kontaktmasse, die neben Silicium mindestens eine kupferhaltige Verbindung als Katalysator und mindestens einen Promotor enthält, mit einem Alkylhalogenid.

Das grundlegende Verfahren zum Herstellen von Methylchlorsilanen ist die direkte Umsetzung von gemahlenem Silicium mit Methylchlorid in Gegenwart von Kupfer als Katalysator. Die Umsetzung ist dem Fachmann als "Rochow-Synthese" bekannt und in der US-A 2 380 995 beschrieben.

Nach diesem Verfahren erhalt man eine Mischung von Methylchlorsilanen, bei der Dichlordimethylsilan (Di) den Hauptanteil stellt. Darüber hinaus bilden sich Methyltrichlorsilan (Tri) sowie weitere Produkte, wie z.B. Trimethylchlorsilan (Mono), Tetramethylsilan (TMS), Methylhydrogendichlorsilan (MeH) und höhersiedende Methylchlordisilane (PS).

Seit dem Auffinden der Synthese hat man sich darum bemüht, das Verfahren zur Durchführung der Synthese zu verbessern und den Anteil an Dichlordimethylsilan zu erhöhen.

Dies erreicht man vor allem durch Verwendung reiner Rohstoffe und durch den Einsatz von Promotoren. Geeignete Promotoren sind gemäß EP-A 223 447 Zink, Zinn und Phosphor, elementar oder in Form ihrer Verbindungen. Aus EP-A 391 133 ist bekannt, neben Zink und gegebenenfalls Zinn auch flüchtige Phosphorverbindungen als Promotoren einzusetzen. Bei hohen Phosphorkonzentrationen erreicht man zwar akzeptable Selektivitäten bezüglich Dichlordimethylsilan, die Ausbeuten sind jedoch unbefriedigend.

Aufgabe der vorliegenden Erfindung war daher die Bereitstellung eines Verfahrens zur Herstellung von Alkylchlorsilanen, das eine hohe Selektivität und eine hohe Ausbeute aufweist.

Es wurde nun gefunden, daß durch bestimmte kupferhaltige Katalysatoren zusammen mit mindestens einer bei Raumtemperatur flüssigen oder gasförmigen Phosphorverbindung als Promotor hohe Ausbeuten und gute Selektivitäten erreicht werden.

Gegenstand der vorliegenden Erfindung ist daher ein Verfahren zur Herstellung von Alkylhalogensilanen durch Umsetzung einer Kontaktmasse, die neben Silicium mindestens eine kupferhaltige Verbindung als Katalysator und mindestens einen Promotor enthält, mit einem Alkylhalogenid, wonach als kupferhaltige Verbindung eine Verbindung der Formel I

Cuₓ(Cu₂O)_{y}(CuO)_{z} (I)

mit x + y + z =1,
die eine BET-Oberfläche von 0,05 bis 1,0m ²/g und einen mittleren Teilchendurchmesser zwischen 1 und 200 µm, vorzugsweise kleiner 100 µm, besonders bevorzugt zwischen 10 und 80 µm, aufweist und als Promotor eine bei Raumtemperatur flüssige odere gasförmige Phosphorverbindung, eingesetzt wird.

Die BET-Oberfläche wurde dabei mit einem Flow-Sorb 2/2300 der Firma Micrometrics mit N₂ ermittelt.

Der mittlere Teilchendurchmesser wurde mit einem Malvern Master Sizer mittels Laserbeugung ermittelt.

In einer bevorzugten Ausführungsform der Erfindung ist bei diesen eingesetzten Katalysatoren x = 0 bis 0,3 und x + y + z =1.

Der eingesetzte Katalysator weist dabei vorzugsweise folgende Indizes auf:
x = 0 - 0,3, besonders bevorzugt 0 - 0,2,
y = 0,2 - 0,9, besonders bevorzugt 0,4 - 0,8 und
z = 0,1 - 0,6, besonders bevorzugt 0,3 - 0,5,
wobei die Summe aus x + y + z immer 1 ergibt.

Die kupferhaltige Verbindung kann dabei mit bis zu jeweils 3000 ppm an Zinn, Zink, Aluminium, Eisen, Antimon, Arsen, Phosphor, der Alkali- und/oder Erdalkalimetalle, elementar oder in Form ihrer Verbindungen, dotiert sein.

Die eingesetzte kupferhaltige Verbindung ist über das in DE-P 19619161.0 beschriebene Verfahren herstellbar.

Als bei Raumtemperatur flüssige oder gasförmige Phosphorverbindungen sind solche Verbindungen zu verstehen, die bei 20 bis 30°C und einem Druck von 1 atm diese Aggregatzustände aufweisen. Dabei werden vorzugsweise Verbindungen der Formel PRₐX_{b} mit a = 0-3 und b = 3-a, X = H, F, Cl, Br und/oder OR, NR₂ mit R = C₁-C₆-Alkyl, eingesetzt.

Als Phosphorverbindung sind dabei PF₃, PCl₃, PBr₃, P(OR)₃, mit R = C₁-C₆-Alkyl und/oder PH₃ besonders bevorzugt. Ganz besonders bevorzugt werden PCl₃ und/oder P(OMe)₃ eingesetzt.

In einer bevorzugten Ausführungsform der Erfindung wird die Phosphorverbindung in einer Menge von 20-2500 ppm, bezogen auf Silicium, eingesetzt.

Vorzugsweise beträgt die Menge an kupferhaltiger Verbindung 0,05 bis 10 Gew.-%, bevorzugt zwischen 0,1 bis 7 Gew.-%, bezogen auf Silicium.

In einer weiteren Ausführungsform der Erfindung werden zusätzlich zu der Phosphorverbindung als Promotor andere bekannte Promotorsubstanzen eingesetzt. Als Promotorsubstanzen sind Zink oder Zinkverbindungen, Aluminium oder Aluminiumverbindungen, Zinn oder Zinnverbindungen, Selen oder Selenverbindungen, Tellur oder Tellurverbindungen (siehe DE-P 19621306.1), Schwefel- oder Schwefelverbindungen (wie z.B. gemäß DE-P 1 953 2315.7, S. 7) bzw. Indium- oder Indiumverbindungen alleine oder in Kombination bevorzugt.

Als Verbindungen der Elemente Zn, Al, Sn, Se, Te, S und/oder In kommen z.B. Oxide, Halogenide, Legierungen o.ä. in Frage.

Die Promotorsubstanzen werden vorzugsweise, sofern sie vorhanden sind, in folgenden Mengen zugesetzt:
- Zinn: 5-200 Teile pro 1.000 000 Teile Silicium und/oder
- Zink: 10-10.000 Teile pro 1.000.000 Teile Silicium und/oder
- Aluminium: 0,01-1 Gew.-%, bezogen auf Silicium und/oder
- Selen/Tellur: 20-2500 Teile pro 1.000 000 Teile Silicium und/oder
- Indium: 20-2500 Teile pro 1.000 000 Teile Silicium.
- Schwefel: 5-2000 Teile pro 1.000 000 Teile Silicium.

Die Promotorsubstanzen Sn, Zn, Al, Se, Te, In und/oder S können dem verwendeten Silicium bereits zulegiert worden sein (z.B. US-A 50 49 343, US-A 49 46 978, WO 94/00 799).

Bevorzugt werden Zinn, Aluminium oder Zink, alleine oder in Kombinationen, in elementarer Form oder in Form ihrer Verbindungen, eingesetzt.

Als Silicium im Sinne der Erfindung kann Silicium mit einer Reinheit von > 95 % eingesetzt werden. Bevorzugt wird Silicium mit einer Reinheit > 98 %. Die Teilchengröße des eingesetzten Siliciums kann beliebig gewählt werden, beträgt aber vorzugsweise zwischen 50-500 µm.

Als Silicium kann ebenfalls eingesetzt werden: verdüstes Silicium gemäß US-A 50 15 751 oder auch strukturoptimiertes Silicium gemäß EP-A 610 807 oder Silicium, hergestellt gemäß EP-A 673 880 bzw. EP-A 522 844.

Spezielle Siliciumsorten, wie z.B. in DE-A 40 37 021 oder EP-A 685 428 beschrieben, können ebenfalls verwendet werden.

Als Alkylhalogenide im Sinne der Erfindung werden alle gängigen C₁-C₈-Alkylhalogenide eingesetzt, bevorzugt Methylchlorid.

Der kupferhaltigen Verbindung (Katalysator) können zusätzlich alle gängigen Kupferkatalysatoren für die Rochow-Synthese zudosiert werden, beispielhaft werden genannt: teiloxidiertes Kupfer (Cu°/Cu₂O/CuO) (US-A 4 500 724), Mischungen aus metallischem Kupfer und Cu₂O/CuO (DE-A 3 501 085), Cu₂Cl₂, CuCl₂ (US-A 4 762 940), Cu-Formiat (US-A 4 487 950), etc.. Bevorzugt wird teiloxidiertes Kupfer mit den Bestandteilen Cu°, Cu₂O und/oder CuO eingesetzt. Teiloxidiertes Kupfer hat dabei vorzugsweise folgende Zusammensetzung: Cu°: 0 bis 30 Gew.-%, Cu2O: 30 bis 90 Gew.-% und CuO: 10 bis 60 Gew.-%, wobei die Summe aller Bestandteile 100 % ergibt.

Durch die Zugabe weiterer Mengen an Katalysator soll die Gesamtmenge an Kupfer 10 Gew.-%, bezogen auf Silicium, nicht überschritten werden.

Das Verfahren wird üblicherweise in dem für die Rochow-Synthese gängigen Temperatur- und Druckbereich durchgeführt.

Bevorzugt ist eine Temperatur zwischen 280-390°C und ein Druck von 1 bis 10 bar.

Als Kontaktmasse wird eine physikalische Mischung aus Silicium und Kupfer und/oder mindestens einer kupferhaltigen Verbindung als Katalysator sowie mindestens einem Promotor definiert.

Diese Kontaktmasse kann unbehandelt oder mit einem geeigneten Verfahren teilweise oder vollständig vorbehandelt bzw. präformiert dem Reaktor zur Reaktion zugeführt werden. Derartige Verfahren sind beispielsweise in Voorhoeve: "Organohalosilanes- Precursores to Silicones", Elsevier New York 1967, S. 129 beschrieben.

Das erfindungsgemäße Verfahren ist auch nicht auf eine bestimmte Verfahrenstechnik bei der Direktsynthese beschränkt. So kann die Reaktion diskontinuierlich oder kontinuierlich geführt werden, und es kann sowohl im Fließbett, im Rührbett als auch im Festbett gearbeitet werden.

Die flüssige oder gasförmige Phosphorverbindung wird vorzugsweise dem Methylchloridstrom zugegeben.

Die nachfolgenden Beispiele sollen die vorliegende Erfindung näher illustrieren, sind aber keinesfalls einschränkend zu verstehen (%-Angaben bedeuten Gew.-%).

### Ausführungsbeispiele

Die folgenden Experimente werden in einem Rührbettreaktor aus Glas, innerer Durchmesser = 30 mm, der mit einem Spiralrührer ausgestattet ist, durchgeführt. Es wurde ein Silicium mit einer Reinheit von mindestens 98,8 % mit einem mittleren Teilchendurchmesser von 71 bis 160 µm eingesetzt.

Die Kontaktmasse bestand aus 40 g Silicium, 3,2 g Kupferkatalysator und 0,05 g ZnO und wurde vor dem Einsatz homogenisiert.

Methylchlorid wurde unter einem Druck von 2 bar von unten über eine Glasfritte durch die Kontaktmasse geleitet. Der Durchsatz an Methylchlorid wurde konstant gehalten und betrug in allen Fällen ca. 1,8 l/h. Nach Durchlaufen der Induktionsphase wurde eine stationäre Versuchsphase bei 330°C eingestellt. Unter diesen Bedingungen wurde die Menge an gebildeten Rohsilan pro Zeiteinheit bestimmt. Die Ermittlung der Einzelbestandteile erfolgte gaschromatographisch.

Die angegebenen Werte sind Mittelwerte aus jeweils vier Einzelbestimmungen, jeder Versuch wurde mindestens einmal reproduziert. Alle Mengenangaben beziehen sich auf eingesetztes Silicium.

### Beispiel 1

Dieses Beispiel zeigt den Einfluß eines PCl₃-Zusatzes zur Kontaktmasse in der Rochow-Synthese. Das eingesetzte Silicium wies dabei die folgenden Hauptnebenbestandteile auf: Al: 0,19 %; Ca: 0,073 %; Fe: 0,46 %; Ti: 0,022 %, P, Zn, Cu, Ni, Cr, V <27 mg/kg, Pb, Sn <1 mg/kg. Der verwendete Kupferkatalysator war nach DE-P 19619161.0 hergestellt und wies folgende charakteristischen Werte auf: Cu_{0,2}(Cu₂O)_{0,63}(CuO)_{0,17}, BET-Oberfläche: 0,47 m²/g, Sn: 460 ppm. Einwaagen und Ergebnisse sind in der nachfolgenden Tabelle 1 aufgeführt.

**Tabelle 1**

| Versuch | Zusatz P [ppm] | Prod.-Rate [g/h] | Di [%]¹⁾ | Tri/Di¹⁾ |
|---|---|---|---|---|
| 1 | 0 | 11,0 | 91,6 | 0,042 |
| 2 | 100 | 11,5 | 92,0 | 0,039 |
| 3 | 200 | 11,3 | 92,4 | 0,040 |

| | | | | |
|---|---|---|---|---|
| 1) Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | |

Es zeigte, daß sich bei Zusatz von Phosphor in Form von PCl₃ in Kombination mit dem Kupferkatalysator zur Kontaktmasse die verbesserte Selektivität bei gesteigerter Ausbeute ergibt.

### Beispiel 2

Dieses Beispiel zeigt den Vergleich mit einem anderen, herkömmlichen Katalysator gemäß US-A 4520 130. Das eingesetzte Silicium wies die folgenden Hauptnebenbestandteile auf: Al: 0,18 %, Ca: 0,032 %; Fe: 0,38 %, Ti: 0,024 %, P, Zn, Cu, Ni, Cr, V <30 ppm, Pb, Sn: <1 ppm. Der herkömmliche Katalysator wies folgende charakteristischen Werte auf: Cu_{0,23}(Cu₂O)_{0,45} (CuO)_{0,32}, BET-Oberfläche: 2,0 m²/g, Sn: 110 ppm. Einwaage und Ergebnisse sind in der nachfolgenden Tabelle 2 aufgeführt.

**Tabelle 2**

| Versuch | Katalysator | Zusatz P [ppm] | Prod.-Rate [g/h] | Di [%]¹⁾ | Tri/Di¹⁾ |
|---|---|---|---|---|---|
| 1 | erfindungsgemäß | 0 | 10,3 | 91,9 | 0,042 |
| 2 | herkömmlich | 0 | 9,9 | 87,6 | 0,076 |
| 3 | erfindungsgemäß | 100 | 10,4 | 92,3 | 0,040 |
| 4 | herkömmlich | 100 | 9,2 | 88,8 | 0,071 |

| | | | | | |
|---|---|---|---|---|---|
| 1) Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | |

Es zeigt sich, daß bei Einsatz des erfindungsgemäßen Katalysators durch den Zusatz von PCl₃ sowohl die Produktionsrate als auch die Selektivität bezüglich Dimethyldichlorsilan (Di) gesteigert werden kann, wogegen ein herkömmlicher Katalysator Einbußen bei der Ausbeute hinnehmen muß.

## Patentansprüche

1. Verfahren zur Herstellung von Alkylhalogensilanen durch Umsetzung einer Kontaktmasse, die neben Silicium mindestens eine kupferhaltige Verbindung als Katalysator und mindestens einen Promotor enthält, mit einem Alkylhalogenid, **dadurch gekennzeichnet, daß** als kupferhaltige Verbindung eine Verbindung der Formel I
Cuₓ(Cu₂O)_{y}(CuO)_{z} (I)
mitx+y+z=1,
die eine BET-Oberfläche zwischen 0,05 und kleiner als 1,0m²/g und einen mittleren Teilchendurchmesser zwischen 1 und 200 µm aufweist und als Promotor eine bei Raumtemperatur flüssige oder gasförmige Phosphorverbindung eingesetzt wird.

2. Verfahren nach Anspruch 1, **dadurch gekennzeichnet, daß** als kupferhaltige Verbindung der Formel I Verbindungen, in denen
x=0-0,3
y = 0,2 - 0,9 und
z = 0,1 - 0,6 und
x+y+z= 1 ist,
eingesetzt wird.

3. Verfahren nach einem der Ansprüche 1 oder 2, **dadurch gekennzeichnet, daß** als Phosphorverbindung PF₃, PCl₃, PBr₃, P(OR)₃, mit R = C₁-C₆-Alkyl und/oder PH₃ eingesetzt wird.

4. Verfahren nach einem oder mehreren der Ansprüche 1 bis 3, **dadurch gekennzeichnet, daß** die Phosphorverbindung in einer Menge von 20-2500 ppm, bezogen auf Silicium, eingesetzt wird.

5. Verfahren nach einem oder mehreren der Ansprüche 1 bis 4, **dadurch gekennzeichnet, daß** die kupferhaltige Verbindung in einer Menge von 0,05 bis 10 Gew.-%, bezogen auf Silicium, eingesetzt wird.

6. Verfahren nach einem oder mehreren der Ansprüche 1 bis 5, **dadurch gekennzeichnet, daß** zusätzlich als Promotorsubstanzen Zinn, Zink, Selen, Tellur, Schwefel, Aluminium und Indium, alleine oder in Kombination, in elementarer Form oder in Form ihrer Verbindungen, eingesetzt werden.

7. Verfahren nach einem oder mehreren der Ansprüche 1 bis 6, **dadurch gekennzeichnet, daß** als Alkylhalogenid Methylchlorid eingesetzt wird.

## Claims

1. Process for preparing alkyl halosilanes by reacting a contact material comprising, in addition to, silicon, at least one copper-containing compound as catalyst and at least one promoter, with an alkyl halide, **characterised in that** said copper-containing compound is a compound of the formula I
Cuₓ(Cu₂O)_{y}(CuO)_{z} (I)
where x+y+z=1,
having a BET surface area between 0.05 and less than 1,0 m²/g and an average particle diameter between 1 and 200 µm and wherein a phosphorus compound which is liquid or gaseous at room temperature is used as promoter.

2. A process according to claim 1, **characterised in that** compounds in which
x=0 - 0.3,
y=0.2 - 0.9 and
z=0.1 - 0.6 and
x+y+z=1 ,
are used as copper-containing compound of the formula I,

3. Process according to one of the claims 1 or 2, **characterised in that** PF₃, PCl₃, PBr₃, P(OR)₃, where R is a C₁-C₆-alkyl group and/or PH₃, is used as phosphorus compound.

4. Process according to one or more of the claims 1 to 3, **characterised in that** the phosphorus compound is used in an amount of 20-2500 ppm based on silicon.

5. Process according to one or more of the claims 1 to 4, **characterised in that** the copper-containing compound is used in an amount of 0.05 to 10 % by weight based on silicon.

6. Process according to one or more of the claims 1 to 5, **characterised in that** tin, zinc, selenium, tellurium, sulphur, aluminium or indium, individually or in combination, in elemental form or in the form of their compounds, are additionally used as promoter substances.

7. Process according to one or more of the claims 1 to 6, **characterised in that** methyl chloride is used as the alkyl halide.

## Revendications

1. Procédé pour la préparation d'alkylhalogénosilanes par mise en réaction d'une masse en contact qui, outre du silicium contient au moins un composé contenant du cuivre en tant que catalyseur et au moins un promoteur, avec un halogénure d'alkyle, **caractérisé en ce qu'**on utilise comme composé contenant du cuivre un composé de formule I
Cuₓ(Cu₂O)_{y}(CuO)_{z} (I)
où x+y+z=1,
qui présente une surface BET comprise entre 0,05 et moins de 1,0 m²/g et un diamètre moyen de particule compris entre 1 et 200 µm et en tant que promoteur un composé phosphoré liquide ou gazeux à la température ambiante.

2. Procédé selon la revendication 1, **caractérisé en ce qu'**on utilise comme composé de formule I contenant du cuivre des composés dans lesquels
x=0-0,3
y = 0,2 - 0,9 et
z = 0,1 - 0,6 et
x+y+z=1,

3. Procédé selon la revendication 1 ou 2, **caractérisé en ce qu'**on utilise en tant que composé phosphoré PF₃, PCl₃, PBr₃, P(OR)₃, où R = alkyle en C₁-C₆ et/ou PH₃.

4. Procédé selon une ou plusieurs des revendications 1 à 3, **caractérisé en ce que** le composé phosphoré est utilisé en une quantité de 20 - 2 500 ppm, par rapport au silicium.

5. Procédé selon une ou plusieurs des revendications 1 à 4, **caractérisé en ce que** le composé contenant du cuivre est utilisé en une quantité de 0,05 à 10 % en poids, par rapport au silicium.

6. Procédé selon une ou plusieurs des revendications 1 à 5, **caractérisé en ce qu'**en outre comme substances promotrices on utilise, seuls ou en combinaison, de l'étain, du zinc, du sélénium, du tellure, du soufre, de l'aluminium et de l'indium, sous forme élémentaire ou sous forme de leurs composés.

7. Procédé selon une ou plusieurs des revendications 1 à 6, **caractérisé en ce qu'**on utilise en tant qu'halogénure d'alkyle le chlorure de méthyle.
